# EUROPÄISCHE PATENTSCHRIFT

(11) **EP 0 519 387 B1**
(45) Veröffentlichungstag und Bekanntmachung des Hinweises auf die Patenterteilung: **31.05.1995**
(21) Anmeldenummer: 92110101.0
(22) Anmeldetag: 16.06.1992
(51) Int. Cl.: F16D 25/12, F16D 25/063

(54) **Druckmittelbetätigte Reibscheibenkupplung**
Pressure actuated friction disc clutch
Embrayage à disque de friction actionné par fluide sous pression

(30) Priorität: 17.06.1991 DE 4119874
(43) Veröffentlichungstag der Anmeldung: 23.12.1992
(73) Patentinhaber: DEERE & COMPANY, Moline, Illinois 61265 (US)
(72) Erfinder: Hering, Hubert, W-6719 Kirchheim (DE)
(74) Vertreter: Feldmann, Bernhard

(56) Entgegenhaltungen:
- EP-A- 0 365 794
- DE-A- 3 605 004
- FR-A- 1 518 672
- FR-A- 2 583 479
- FR-A- 2 633 024
- GB-A- 586 385
- GB-A- 1 483 860
- US-A- 3 461 993
- US-A- 4 458 797

## Beschreibung

Die Erfindung betrifft eine druckmittelbetätigte Reibscheibenkupplung, die durch Federkraft geschlossen und durch Druckmitteldruck geöffnet wird, wobei der die Kupplungsscheiben beinhaltende Raum als im wesentlichen abgedichtete Kammer ausgebildet ist, deren radial innen liegender Bereich zum Lösen der Kupplung mit einer Druckquelle verbindbar ist, gemäß dem Oberbegriff des Patentanspruchs 1.

Bei landwirtschaftlichen und industriellen Fahrzeugen, wie Ackerschlepper und dergleichen, finden für die Zuschaltung des Vorderradantriebes druckmittelbetätigte Reibscheibenkupplungen Anwendung. Diese Kupplungen werden gewöhnlich durch Drucköl gesteuert. Aus Sicherheitsgründen ist das Kupplungsscheibenpaket durch eine Federanordnung belastet, so daß im drucklosen Zustand die Kupplung eingeschaltet (eingerückt) ist. Wird jedoch eine Kolbenkammer der Kupplung mit Drucköl beaufschlagt, so drückt der Kolben die Federanordnung zusammen, wodurch die die Oberflächen der Kupplungsscheiben aufeinander pressende Belastung und damit auch die Kupplungswirkung aufgehoben wird.

Derartige Kupplungen enthalten gewöhnlich neben den Kupplungsscheiben Druckplatten, die das Kupplungsscheibenpaket beidseits abdecken, Übertragungsmittel zur Übertragung der Kolbenkraft auf die Federanordnung und weitere Hilfsmittel. Eine Druckplatte stützt das Kupplungsscheibenpaket an der Kupplungstrommel ab, während an der anderen Druckscheibe die Federanordnung angreift.

Durch die US-A-3,461,993 ist eine durch hydraulischen Druck zu öffnende Reibscheibenkupplung für den Abtrieb eines Elektromotors bekannt geworden, bei der ein Ende einer Ausgangswelle eine Kupplungsplatte trägt. Die Kupplungsplatte befindet sich innerhalb eines Zylindergehäuses, welches mit einem axial zum Kupplungsgehäuse verschiebbaren Kolbenteil eine nach außen abgedichtete Kammer einschließt. Außerhalb der Kammer liegt an dem Kolbenteil eine sich an dem Zylindergehäuse abstützende Federscheibe an, die das Kolbenteil in das Zylindergehäuse drückt, so daß die Kupplungsplatte zwischen an dem Zylindergehäuse und dem Kolbenteil angeordneten Reibflächen eingespannt wird. Die Kammer steht über eine axiale Bohrung der Ausgangswelle sowie über Steuerventile mit einer Konstantpumpe in Verbindung und läßt sich unter hydraulischen Druck setzen, so daß sich das Kolbenteil gegen die Spannkraft der Federscheibe aus dem Zylindergehäuse heraus schiebt und die Kupplungsplatte frei gibt, wobei sich die Kupplung öffnet.

Durch eine derartige Lösung sind Druckplatten und Hilfsmittel zur Übertragung der Kolbenkraft auf die Federanordnung entbehrlich, da der Abkoppelmechanismus in den Bauraum für die Kupplungsscheiben integriert wurde. Somit können Teile eingespart werden, wodurch sich grundsätzlich eine kostengünstige Konstruktion ergibt, die kompakt baut. Die in der US-A-3,461,993 beschriebene Kupplung ist jedoch für den Antrieb von Fahrzeugen nicht geeignet.

Eine hohe Belastung der Kupplung eines Fahrzeugantriebes kann dazu führen, daß die Kupplungsscheiben gegeneinander rutschen, auch wenn die Kupplung eingerückt ist. Dies birgt die Gefahr in sich, daß sich die Kupplungsscheiben infolge Reibungswärme schon nach kurzer Zeit so stark erwärmen, daß sie beschädigt werden.

Die FR-A-2 583 479 beschreibt eine Kupplung mit Ölzirkulation für Kraftfahrzeuge mit zwei in einem abgedichteten Gehäuse zu beiden Seiten einer Reibscheibe angeordneten Druckplatten. Auf die Rückseite einer der Druckplatten wirkt ein durch Federmittel belasteter Kolben, der den Innenraum des Gehäuses in zwei getrennte Kammern, eine Hydraulikkammer, in der die Federmittel liegen und eine Mechanikkammer, in der die Druckplatten und die Reibscheibe liegen, abdichtet. Zwischen den beiden Kammern ist ein Rückschlagventil angeordnet, das öffnet, sobald der Druck in der Mechanikkammer größer als in der Hydraulikkammer ist. Jede der Kammern läßt sich über gesonderte axiale Ringkanäle mit einer Druckquelle verbinden. Wird die Mechanikkammer mit Druck beaufschlagt, so ist das Rückschlagventil geschlossen. Durch den Kammerdruck wird der Kolben verschoben, und die Druckplatten werden von der Reibscheibe gelöst. Das Druckmedium fließt durch auf der Rückseite der Druckplatten vorgesehene Ölzirkulationskanäle radial nach innen und tritt über eine Wellenbohrung aus dem Gehäuse aus. Wird die Hydraulikkammer unter Druck gesetzt, so wird die Kupplung geschlossen. Sobald der Druck in der Hydraulikkammer den Druck in der Mechanikkammer übersteigt, öffnet das Rückschlagventil, und das Öl kann wie oben beschrieben durch die Ölzirkulationskanäle und die Wellenbohrung abfließen. Die beschriebene Kupplung besteht aus einer Vielzahl von Teilen und ist relativ aufwendig ausgebildet.

Die mit der Erfindung zu lösende Aufgabe wird darin gesehen, eine kostengünstig ausbildbare und aus relativ wenigen Bauteilen bestehende druckmittelbetätigte Reibscheibenkupplung der eingangs genannten Art anzugeben, die eine Kühlung der Kupplungsscheiben bei eingerückter Kupplung ermöglicht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die Ventilanordnung steuert den Durchfluß des Druckmittels durch die Kupplung, durch den die Kupplungsscheiben gekühlt werden. Sie ermöglicht es damit, daß das Druckmedium gleichzeitig als Kühlmedium dient. Die Ventilanordnung ist dabei so ausgelegt und angeordnet, daß sie durch den in der Kammer herrschenden Druckmitteldruck gesteuert wird.

Um bei offener Kupplung einen unnötigen Kühldurchfluß durch die Kupplung zu vermeiden, wird durch die Ventilanordnung eine Verbindung zwischen der Kammer und dem Druckmittelsammelbehälter verschlossen, sofern die Kupplungsscheiben infolge des in der Kammer herrschenden Druckes voneinander gelöst sind. Der Schließdruck kann unterhalb des Druckes liegen, der erforderlich ist, um die Lamellen voneinander zu lösen. Der Schließdruck sollte möglichst niedrig sein, z. B. 1/10 des Systemdruckes, damit beim Ausrücken der Kupplung nicht zuviel Druckmedium über die Verbindung in den Sammelbehälter abfließt. Ein hoher Schließdruck würde auch eine erhöhte Federkraft der Federanordnung erfordern.

Der Querschnitt der Verbindung zwischen Kammer und Sammelbehälter wird so gewählt, daß er auch bei einer relativ geringen Druckdifferenz zwischen abgedichteter Kammer und Druckmittelsammelbehälter einen ausreichenden Kühlstromdurchtritt gewährleistet. Der Kühlmitteldurchtritt kann durch einen geringen Überdruck in der Kammer oder durch Fliehkräfte bewirkt werden.

Vorzugsweise enthält der Verbindungskanal zwischen dem radial außen liegenden Bereich der Kammer und dem Drucksammelbehälter wenigstens eine Blende, die bei geöffneter Ventilanordnung den durchtretenden Volumenstrom unabhängig von Änderungen der temperaturabhängigen Viskosität des Druckmittels weitgehend konstant hält.

Eine bevorzugste Ausgestaltung der Erfindung sieht vor, daß die Kupplungsscheiben unmittelbar zwischen einer radial ausgerichteten Fläche des die Kammer begrenzenden Gehäuses und einer radial ausgerichteten Fläche eines federbelasteten, axial zum Gehäuse verschiebbaren Kolbens angeordnet sind, wobei auf der außerhalb der Kammer liegenden Seite des Kolbens wenigstens eine Druckfeder, vorzugsweise eine sich am Gehäuse abstützende Tellerfeder, angreift. Durch eine derartige Lösung sind Druckplatten und Hilfsmittel entbehrlich. Somit können Teile eingespart werden, wodurch sich eine kostengünstige Konstruktion ergibt.

Eine einfache, kostengünstig herstellbare Ventilanordnung ergibt sich dadurch, daß der Kolben wenigstens einen von der Kammer aus nach außen führenden Kanal aufweist, der bei einer Verschiebung des Kolbens gegen die Federkraft selbsttätig verschließbar ist.

Es ist von Vorteil, in dem Gehäuse eine im wesentlichen radiale Öffnung vorzusehen, die mit dem Kanal des Kolbens eine Verbindung zwischen Kammer und Sammelbehälter bildet und bei einer Verschiebung des Kolbens gegen die Federkraft selbsttätig verschlossen wird.

Ferner ist es von Vorteil, das Druckmedium über eine axiale Bohrung und wenigstens eine die Kammer mit der axialen Bohrung verbindende Zulaufbohrung der Kammer zu führen, wobei der Druck sich über ein Steuerventil einstellen läßt.

Zweckmäßigerweise sind mehrere über die axiale Erstreckung des Kupplungsscheibenpaketes verteilte Zulaufbohrungen vorgesehen, so daß das Druckmedium sich rasch in der Kammer ausbreiten und gleichzeitig zwischen die Kupplungsscheiben treten kann, so daß die Scheiben sich leichter voneinander lösen.

Zu diesem Zweck können auch in den Kupplungsscheiben axial ausgerichtete Bohrungen vorgesehen sein. Solche Bohrungen befinden sich vorzugsweise in den mit der Welle in Verbindung stehenden Innenscheiben und zwar in dem Bereich, der radial außerhalb der Verzahnung zwischen den Kupplungsbelagflächen und der Welle liegt.

Um einen Eintritt des Druckmediums zwischen die Platten zu erleichtern ist es ferner von Vorteil, die Oberfläche der Kupplungsscheiben mit Nuten zu versehen, die im wesentlichen radial ausgerichtet und relativ schmal sind, um nicht zu viel Belagfläche zu beanspruchen. Hierdurch kann sich das Druckmedium (Flüssigkeit, z. B. Drucköl) an den Reibflächen und Anlageflächen der Kupplungsscheiben ausbreiten, so daß dann, wenn ein bestimmter Druck in der Kupplungsscheibenkammer erreicht ist und der Kolben gegen die Federanordnung verschoben wird, sich die Kupplungsscheiben voneinander lösen und die Drehmomentenübertragung unterbrochen wird.

Vorzugsweise handelt es sich bei den Kupplungsscheiben um ein Lamellenpaket, das zwischen einer radial ausgerichteten Fläche des die Kammer begrenzenden Gehäuses und einer radial ausgerichteten Fläche des Kolbens angeordnet ist. Der Kolben wirkt somit gleichzeitig als Kupplungsdruckplatte. Gesonderte Kupplungsdruckplatten sind nicht erforderlich.

Um zu vermeiden, daß zwischen Kupplungsgehäuse und Kupplungswelle aufgrund der Druckbelastung in der Kammer Axialkräfte resultieren, werden die hinsichtlich des Druckmediums wirksamen Flächen des Kolbens und des Gehäuses vorzugsweise in etwa gleich groß ausgebildet.

Aufgrund der erforderlichen weitgehenden Abdichtung der Kammer ist der Kühlölstrom begrenzt. Daher wird die erfindungsgemäße Reibscheibenkupplung vorzugsweise dort eingesetzt, wo relativ geringe Reibleistungen übertragen werden oder wo geringe Relativdrehzahlen im ausgekuppelten Zustand zwischen den zu verbindenden Wellen auftreten. Dies ist beispielsweise bei Zwischendifferentialen von Kraftwagen sowie bei Vorderachskupplungen und Differentialsperrkupplungen der Fall.

Anhand der Zeichnung, die Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: eine erfindungsgemäße Reibscheibenkupplung im Querschnitt und
- Fig. 2: den Ausschnitt einer Querschnittsdarstellung mit einer alternativen Ventilanordnung.

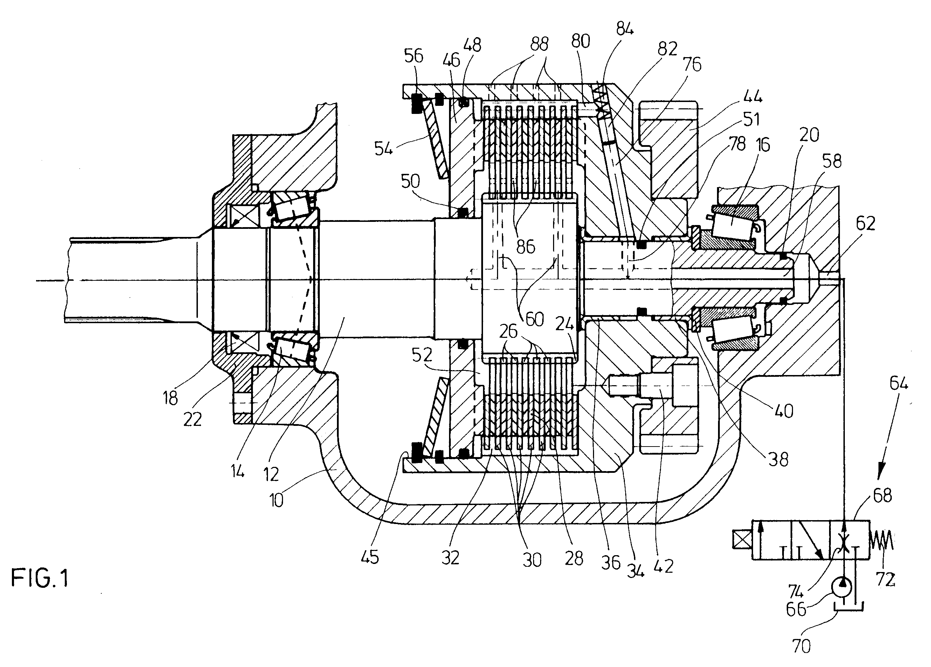

Gemäß Fig. 1 ist in dem Kupplungsgehäuse 10 eine Welle 12 mittels zweier Kegelrollenlager 14, 16 gelagert. Im Kupplungsgehäuse 10 sammelt sich Druck- bzw. Kühlöl, es dient somit als Sammelbehälter. Die Wellenenden sind durch Dichtungen 18, 20 gegenüber dem Kupplungsgehäuse 10 bzw. einem Lagerdeckel 22 abgedichtet.

In ihrem mittleren Bereich trägt die Welle 12 eine Verzahnung 24, die mit den Innenlamellen 26 eines Lamellenpaketes 28 in Eingriff stehen. Die Außenlamellen 30 des Lamellenpaketes 28 greifen in eine Verzahnung 32 einer Kupplungsglocke 34 ein.

Die Kupplungsglocke 34, die als Gehäuse für das Lamellenpaket 28 dient, ist über Gleitlagerbuchsen 36, 38 auf der Welle 12 drehbar gelagert und durch eine Anlaufscheibe 40 zur Aufnahme axialer Kräfte gesichert. Mit der Kupplungsglocke 34 ist durch Schrauben 42 ein Antriebszahnrad 44 verbunden, welches mit einem Ausgangszahnrad eines nicht dargestellten Fahrzeuggetriebes in Eingriff steht.

In einer zylinderförmigen Ausnehmung 45 der Kupplungsglocke 34 ist ein Kolben 46 axial verschiebbar, jedoch drehfest angeordnet. Der Kolben 46 ist durch einen O-Ring 48 gegenüber der Kupplungsglocke 34 und durch eine Dichtung 50 gegenüber der Welle 12 abgedichtet. Die Dichtung 50 ist sowohl auf Drehbewegungen als auch auf axiale Verschiebungen ausgelegt. Durch eine weitere Dichtung 51 wird die Welle 12 gegenüber der Kupplungsglocke 34 abgedichtet.

Die Kupplungsglocke 34, die Welle 12 und der Kolben 46 schließen eine im wesentlichen abgedichtete Kammer 52 ein, in der sich das Lamellenpaket 28 befindet. Das Lamellenpaket 28 liegt mit seiner einen Seite an einem ringförmigen Vorsprung der Kupplungsglocke 34 und mit seiner anderen Seite an einem ringförmigen Vorsprung des Kolbens 46 an. Gesonderte Druckplatten sind nicht vorgesehen.

Der außerhalb des Kolbens 46 liegende Bereich der Ausnehmung 45 der Kupplungsglocke 34 nimmt eine Tellerfeder 54 auf, deren äußerer Rand sich an einem mit der Kupplungsglocke 34 in Eingriff stehenden Sicherungsring 56 abstützt und deren axial innerer Bereich gegen die Außenfläche des Kolbens 46 vorgespannt ist, so daß der Kolben 46 zum Lamellenpaket 28 verschoben wird und dieses zusammendrückt. Mit zusammengedrücktem Lamellenpaket 28 ist die Kupplung eingerückt und überträgt ein Drehmoment von dem Antriebszahnrad 44 über die Kupplungsglocke 34 auf die Welle 12. Die Vorspannung der Tellerfeder 54 ist so gewählt, daß ein vorgebbares Drehmoment übertragen wird, ohne daß die Lamellen 26, 30 gegeneinander schleifen.

Die Welle 12 weist eine axiale Bohrung 58 sowie radial verlaufende Zulaufbohrungen 60 auf. Die Zulaufbohrungen 60, von denen lediglich zwei dargestellt sind, verbinden die axiale Bohrung 58 mit der Kammer 52. Die axiale Bohrung 58 steht über eine Gehäusebohrung 62 mit einem Hydraulikversorgungssystem 64 in Verbindung. Letzteres besteht im wesentlichen aus einer Hydraulikpumpe 66, einem Ventil 68 und einem Sammelbehälter 70. Die Pumpe 66 liefert den Systemdruck von beispielsweise 12 bar. Das Ventil 68 ist ein elektromagnetisches Dreiwege-Steuerventil mit drei Stellungen, welches durch ein elektrisches Steuersignal gegen die Kraft einer Feder 72 aus seiner dargestellten ersten Stellung verschiebbar ist. Der Grad der Verschiebung ist von der Größe des elektrischen Steuersignals abhängig.

In der ersten, dargestellten Stellung verbindet das Ventil 68 den Ausgang der Hydraulikpumpe 70 mit der Kammer 52. In dieser Stellung enthält das Ventil 68 jedoch eine Drosselstelle 74, so daß der Systemdruck der Pumpe 66 auf beispielsweise 1 bis 2 bar abgesenkt wird. Dieser Druck reicht nicht aus, um den Kolben 46 gegen die Kraft der Tellerfeder 54 nach außen zu bewegen, die Lamellen 26, 30 voneinander zu lösen und die Kupplung auszurücken. Er dient jedoch der Kühlung des Lamellenpakets 28, wie noch beschrieben werden wird.

In einer zweiten, mittleren Stellung des Ventils 68 wird die Kammer 52 mit dem Sammelbehälter 70 verbunden, so daß die Kammer 52 druckentlastet wird und die Kupplung auch in dieser Stellung eingeschaltet ist.

In einer dritten Stellung verbindet das Ventil 68 den Ausgang der Hydraulikpumpe 70 mit der Kammer 52 ohne Zwischenschaltung einer nennenswerten Drosselstelle. Der Druck in der Kammer 52 steigt auf den Systemdruck an und führt dazu, daß sich der Kolben 46 gegen die Kraft der Tellerfeder 54 nach außen bewegt, so daß die das Lammellenpaket 28 zusammenpressende Kraft der Kraft der Tellerfeder 54 entgegenwirkt und sich die Lamellen 26, 30 gegeneinander verdrehen können. Die Kupplung wird somit in dieser dritten Ventilstellung ausgerückt und überträgt kein Drehmoment.

In der Kupplungsglocke 34 verläuft ein im wesentlichen radialer Kanal 76, der mit einem entsprechenden Kanal 78 in der Welle 12 die axiale Bohrung 58 der Welle 12 mit der äußeren Mantelfläche der Kupplungsglocke 34 verbindet. Der äußere Bereich des Kanals 76 steht über einen Querkanal 80 mit dem radial außenliegenden Bereich der Kammer 52 in Verbindung. In dem Kanal 76 ist ein Ventilteil 82 verschiebbar angeordnet, durch das die Öffnung zwischen Querkanal 82 und Kanal 76 verschließbar ist. Das Ventilteil 82 ist durch eine Feder 84 belastet und wird durch diese radial nach innen gedrückt in dem Bestreben, die Öffnung offen zu halten.

In der offenen Stellung des Ventilteils 82 ist ein Kühlmitteldurchfluß von der Pumpe 70 über das Ventil 68, die Bohrung 58, die Zulaufbohrungen 60, die Kammer 52 und den Querkanal 80 in den Ölsumpf des Kupplungsgehäuses 10 möglich. Dies bedeutet, daß bei eingerückter Kupplung ein Kühlflüssigkeitsstrom aufrechterhalten wird, der die Kupplungslamellen 26, 30 vor Überhitzung für den Fall schützt, daß die Kupplungslamellen 26, 30 infolge Überlast gegeneinander rutschen.

Zum Auskuppeln wird die Magnetspule des Ventils 68 erregt, so daß dieses in seine dritte Stellung übergeht und ohne Zwischenschaltung einer Drosselstelle den Systemdruck der Hydraulikpumpe 70 an die Kammer 52 anlegt. Gleichzeitig wird durch den Druck das Ventilteil 82 gegen die Kraft der Feder 84 radial nach außen verschoben und verschließt den Querkanal 80, so daß ein Druckabbau in der Kammer 52 vermieden wird. Bei geöffneter Kupplung erfolgt somit keine Kühlung des Lamellenpaketes 34.

Soll die Kupplung wieder eingerückt werden, so wird die Magnetspule des Ventils 68 aberregt, so daß das Ventil 68 wieder in seine erste Stellung zurückkehrt. Hierbei durchläuft es eine mittlere Stellung, in der die Kammer 52 mit dem Sammelbehälter 70 verbunden und druckentlastet wird. Das Ventil 68 ist so ausgelegt, daß es in dieser mittleren Stellung für eine Zeitspanne verharrt, die ausreicht, um den Druck in der Kammer 52 und der Bohrung 58 vollständig abzubauen. Damit nimmt auch das unter dem Einfluß der Feder 84 stehende Ventilteil 82 seine ursprünglich dargestellte Lage ein und öffnet den Querkanal 80.

Um einen guten Druckausgleich in der Kammer 52 zu gewährleisten, weisen die Innenlamellen 26 in ihrem radial inneren Bereich Querbohrungen 86 auf. Ferner sind auf den die Kupplungsbeläge tragenden Flächen der Kupplungslamellen 26, 30 in etwa radial verlaufende Nuten eingebracht, durch die Flüssigkeit zwischen die Lamellen 26, 30 treten kann, so daß ein Druckausgleich zwischen den Lamellen 26, 30 eintritt. Ferner ermöglichen die Nuten einen Flüssigkeitsdurchtritt von radial innen nach außen, um auch bei eingerückter Kupplung einen Kühlflüssigkeitsstrom aufrecht zu erhalten.

Eine zum Ventilteil 82 alternative Lösung für die Aufrechterhaltung eines Kühlflüssigkeitsstromes sieht vor, daß auf dem Umfang des äußeren Zylindermantels der Kupplungsglocke 34 relativ enge Bohrungen 88 vorgesehen sind. Durch diese Bohrungen 88 kann infolge der Fliehkraft oder einer Druckversorgung durch das Hydrauliksystem 64 kontinuierlich Flüssigkeit aus der Kammer 52 ausgeschleudert werden. Die Bohrungen 88 müssen so groß sein, daß sie einen ausreichenden Kühlstrom sicherstellen, jedoch beim Auskuppeln nicht zu einem unerwünscht hohen Druckabfall in der Kammer 52 führen.

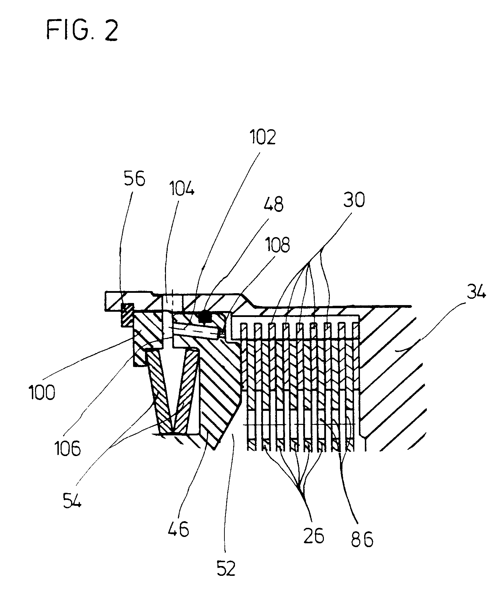

Eine weitere zum Ventilteil 82 bevorzugte Lösung geht aus Fig. 2 hervor, die einen Teilausschnitt einer zu der in Fig. 1 dargestellten ähnlichen Reibscheibenkupplung zeigt, wobei sich entsprechende Teile mit den gleichen Bezugszeichen versehen wurden.

In Fig. 2 sind jeweils die oberen Bereiche einer Kupplungsglocke 34, eines Kolbens 46, der durch einen O-Ring 48 gegen die Kupplungsglocke 34 abgedichtet ist, und mehrerer Außenlamellen 30 sowie Innenlamellen 26 erkennbar. Der Kolben 46 wird durch zwei hintereinandergeschaltete Tellerfedern 54 in die Kammer 52 der Kupplungsglocke 34 hinein gedrückt und preßt die Innen- und Außenlamellen 26, 30 aufeinander. Die äußere Tellerfeder stützt sich mit ihrem äußeren Rand an einem Distanzring 100 ab, der seinerseits durch einen Sicherungsring 56 an einer axialen Verschiebung gehindert wird und als Anschlag für eine axiale Bewegung des Kolbens 46 dient.

Der Kolben 46 weist in seinem oberen Bereich, der außerhalb der radialen Erstreckung der Innenlamellen 26 liegt, einen im wesentlichen axial ausgerichteten Kanal 102 auf. Der Mantelbereich der Kupplungsglocke 34 enthält in seinem oberen Bereich eine radiale Durchbrechung 104. Durch den Kanal 102 und die Durchbrechung 104 besteht eine Verbindung zwischen der Kammer 52 und dem Äußeren der Kupplungsglocke 34, das als Sammelbehälter dient.

Bei einer Verschiebung des Kolbens 46 aus der Kammer 52 nach außen (gemäß Fig. 2 nach links) wird die Durchbrechung 104 durch die äußere Mantelfläche des Kolbens 46 verschlossen. Sobald der Kolben 46 mit seiner äußeren Ringfläche 106 gegen den Distanzring 100 aufläuft, wird die Öffnung des Kanals 102 verschlossen. Damit wirken die Durchbrechung 104 mit der Mantelfläche des Kolbens sowie der Kanal 102 mit dem Distanzring 100 als Ventilanordnungen, die in Abhängigkeit von der axialen Stellung des Kolbens 34 die Verbindung zwischen der Kammer 52 und dem Sammelbehälter öffnen oder verschließen.

Die Achse des als Durchgangsbohrung ausgebildeten Kanals 102 ist hinsichtlich der Kupplungsdrehachse leicht gekippt, so daß ihre hinsichtlich der Kammer 52 äußere Öffnung radial etwas weiter außen liegt, als ihre innere Öffnung. Diese Schrägausrichtung erleichtert bei sich drehender Kupplungsglocke 34 infolge Fliehkraft das Ausströmen der Kühlflüssigkeit, so daß ein Kühlflüssigkeitsstrom auch dann aufrecht erhalten werden kann, wenn in der Kammer 52 kein Überdruck durch das Hydraulikversorgungssystem 64 aufgebaut wird.

Der Kanal 102 enthält eine Drosselstelle 108, durch deren Bemessung ein konstanter, von der Viskosität des Kühlmediums unabhängiger Volumenstrom einstellbar ist.

## Patentansprüche

1. Druckmittelbetätigte Reibscheibenkupplung, die durch Federkraft geschlossen und durch Druckmitteldruck geöffnet wird, wobei der die Kupplungsscheiben (26, 30) beinhaltende Raum als im wesentlichen abgedichtete Kammer (52) ausgebildet ist, deren radial innen liegender Bereich zum Lösen der Kupplung mit einer Druckquelle verbindbar ist, und wobei in einem radial weiter außen liegenden Bereich der Kammer (52) eine durch den in der Kammer (52) herrschenden Druckmitteldruck steuerbare Ventilanordnung (82) angeordnet ist, dadurch gekennzeichnet, daß die Ventilanordnung radial so weit außen liegt, daß zwischen ihr und dem radial innen liegenden Bereich der Kammer (52) die Kupplungsscheiben (26, 28) angeordnet sind, daß durch die Ventilanordnung (82) der äußere Bereich der Kammer (52) mit einem Druckmittelsammelbehälter verbindbar ist und daß die Ventilanordnung (82) so ausgelegt und angeordnet ist, daß sie durch den in der Kammer (52) herrschenden Druckmitteldruck entgegen einer Vorspannung (84, 54) derart gesteuert wird, daß bei geöffneter Kupplung die Ventilanordnung (82) die Verbindung verschließt und somit unnötiger Durchfluß von Kühl- und Druckmedium vermieden wird.

2. Reibscheibenkupplung nach Anspruch 1, dadurch gekennzeichnet, daß ein Verbindungskanal zwischen dem radial außen liegenden Bereich der Kammer (52) und dem Drucksammelbehälter wenigstens eine Blende (108) enthält, die bei geöffneter Ventilanordnung den durchtretenden Volumenstrom weitgehend konstant hält.

3. Reibscheibenkupplung nach Anspruch 1 oder 2, dadurch gekennzeichnet, daß die Kupplungsscheiben (26, 30) unmittelbar zwischen einer radial ausgerichteten Fläche des die Kammer (52) begrenzenden Gehäuses (34) und einer radial ausgerichteten Fläche eines federbelasteten, axial zum Gehäuse (34) verschiebbaren Kolbens (46) angeordnet sind, wobei auf der außerhalb der Kammer (52) liegenden Seite des Kolbens (46) wenigstens eine Druckfeder (54), vorzugsweise eine sich am Gehäuse (34) abstützende Tellerfeder (54), angreift.

4. Reibscheibenkupplung nach Anspruch 3, dadurch gekennzeichnet, daß der Kolben (46) wenigstens einen von der Kammer (52) aus nach außen führenden Kanal (102) aufweist, der bei einer Verschiebung des Kolbens (46) gegen die Federkraft selbsttätig verschließbar ist.

5. Reibscheibenkupplung nach Anspruch 3 oder 4, dadurch gekennzeichnet, daß das Gehäuse (34) eine im wesentlichen radiale Öffnung (104) aufweist, die mit einem Kanal (102) im Kolben (46) eine Verbindung zwischen Kammer (52) und Sammelbehälter bildet und bei einer Verschiebung des Kolbens (46) gegen die Federkraft selbsttätig verschlossen wird.

6. Reibscheibenkupplung nach einem der Ansprüche 1 bis 5, dadurch gekennzeichnet, daß die Kupplungswelle (12) wenigstens einen im wesentlichen axialen Kanal (58) zur Zufuhr des Druckmittels zur Kammer (52) aufweist.

7. Reibscheibenkupplung nach einem der Ansprüche 1 bis 6, dadurch gekennzeichnet, daß die Kupplungsscheiben (26, 30) axial ausgerichtete Durchbrechungen (86) und/oder Nuten auf ihrer Belagsoberfläche aufweisen.

8. Reibscheibenkupplung nach einem der Ansprüche 1 bis 7, dadurch gekennzeichnet, daß die Kupplungsscheiben (26, 30) ein Lamellenpaket (28) bilden, bei dem drehfest am Gehäuse (34) festgelegte Außenlamellen (30) und drehfest auf der Welle (12) festgelegte Innenlamellen (26) abwechselnd ineinander geschichtet sind.

## Claims

1. A friction disc clutch actuated by a pressure medium, which is engaged by spring force and disengaged by pressure of the pressure medium, wherein the space containing the clutch discs (26, 30) is formed as a substantially sealed chamber (52), whose radially inner region can be connected to a source of pressure to release the clutch, and wherein a valve arrangement (82) controllable by the pressure of the pressure medium reigning in the chamber (52) is arranged in a radially outer region of the chamber (52), characterized in that the valve arrangement is disposed so far radially outwards that the clutch discs (26, 28) are arranged between the valve arrangement and the radially inner region of the chamber (52), in that the outer region of the chamber (52) can be connected to a pressure medium reservoir and in that the valve arrangement (82) is so designed and arranged that it is so controlled against a bias (84, 54) by the pressure of the pressure medium reigning in the chamber (52) that, with the clutch disengaged, the valve arrangement (82) closes the connection and unnecessary throughflow of cooling and pressure medium is thus avoided.

2. A friction disc clutch according to claim 1, characterized in that a connecting channel between the radially outer region of the chamber (52) and the pressure medium reservoir includes at least one stop (108) which keeps the volume of flow passing through the open valve arrangement largely constant.

3. A friction disc clutch according to claim 1 or 2, characterized in that the clutch discs (26, 30) are arranged directly between a radially aligned surface of the housing (34) delimiting the chamber (52) and a radially aligned surface of a spring-loaded piston (46) movable axially relative to the housing (34), wherein at least one compression spring (54), preferably a Belleville spring bearing against the housing (34), engages on the side of the piston (46) lying outside the chamber (52).

4. A friction disc clutch according to claim 3, characterized in that the piston (46) has at least one channel (102) leading out from the chamber (52) and which is automatically closed on displacement of the piston (46) against the spring force.

5. A friction disc clutch according to claim 3 or 4, characterized in that the housing (34) has a substantially radial opening (104) which together with a channel (102) in the piston (46) forms a connection between chamber (52) and reservoir and is automatically closed on displacement of the piston (46) against the spring force.

6. A friction disc clutch according to any of claims 1 to 5, characterized in that the clutch shaft (12) has at least one substantially axial channel (58) for the supply of the pressure medium to the chamber (52).

7. A friction disc clutch according to any of claims 1 to 6, characterized in that the clutch discs (26, 30) have axially directed openings (86) and/or grooves in their lining surfaces.

8. A friction disc clutch according to any of claims 1 to 7, characterized in that the clutch discs (26, 30) form a pack (28) of laminae, in which outer laminae (30) fixed to the housing (34) fast against rotation and inner laminae (26) fixed rotationally fast on the shaft (12) are interleaved alternately.

## Revendications

1. Embrayage à disques de friction actionné par un fluide sous pression, qui est fermé par la force d'un ressort et ouvert par la pression d'un fluide sous pression, l'espace contenant les disques (26, 30) d'embrayage étant conçu en tant que chambre (52) qui est sensiblement étanche, dont la zone située radialement à l'intérieur peut être reliée à une source de pression pour desserrer l'embrayage, et un dispositif à soupape (82), pouvant être commandé par la pression du fluide sous pression régnant dans la chambre (52), étant disposé dans une zone située radialement plus à l'extérieur de la chambre (52), caractérisé en ce que le dispositif à soupape est situé radialement à l'extérieur de telle sorte que les disques (26, 28) d'embrayage sont disposés entre ce dernier et la zone située radialement à l'intérieur de la chambre (52), en ce que la zone extérieure de la chambre (52) peut être reliée par le dispositif à soupape (82) à un collecteur de fluide sous pression, et en ce que le dispositif à soupape (82) est conçu et disposé de façon à être commandé par la pression du fluide sous pression régnant dans la chambre (52) en s'opposant à une précontrainte (84, 54) de telle sorte que, lorsque l'embrayage est ouvert, le dispositif à soupape (82) obture la liaison, ce qui fait qu'une circulation inutile de fluide de refroidissement et sous pression est ainsi évitée.

2. Embrayage à disques de friction selon la revendication 1, caractérisé en ce qu'un canal de liaison entre la zone située radialement à l'extérieur de la chambre (52) et le collecteur de fluide sous pression comporte au moins un diaphragme (108) qui, lorsque le dispositif à soupape est ouvert, maintient dans une large mesure le passage du débit volumique constant.

3. Embrayage à disques de friction selon l'une des revendications 1 ou 2, caractérisé en ce que les disques (26, 30) d'embrayage sont disposés directement entre une surface orientée radialement du carter (34) délimitant la chambre (52) et une surface orientée radialement d'un piston (46) commandé par un ressort, qui peut se déplacer axialement par rapport au carter (34), au moins un ressort de compression (54) étant disposé du côté du piston (46) situé en dehors de la chambre (52), de préférence un ressort à disque (54) qui prend appui contre le carter (34).

4. Embrayage à disques de friction selon la revendication 3, caractérisé en ce que le piston (46) comporte au moins un canal (102), qui à partir de la chambre (52) mène vers l'extérieur, et qui se ferme automatiquement lorsque le piston (46) se déplace en s'opposant à la force d'un ressort.

5. Embrayage à disques de friction selon l'une des revendications 3 ou 4, caractérisé en ce que le carter (34) comporte un orifice (104) sensiblement radial, qui avec un canal (102) dans le piston (46), constitue une liaison entre la chambre (52) et le collecteur, et qui est automatiquement fermé lorsque le piston (46) se déplace en s'opposant à la force d'un ressort.

6. Embrayage à disques de friction selon l'une quelconque des revendications 1 à 5, caractérisé en ce que, pour l'amenée du fluide sous pression à la chambre (52), l'arbre (12) de l'embrayage comporte au moins un canal (58) qui est sensiblement axial.

7. Embrayage à disques de friction selon l'une quelconque des revendications 1 à 6, caractérisé en ce que, sur leur surface de garniture, les disques (26, 30) d'embrayage comportent des perçages (86) et/ou des rainures orientés radialement.

8. Embrayage à disques de friction selon l'une quelconque des revendications 1 à 7, caractérisé en ce que les disques (26, 30) d'embrayage forment un jeu de lamelles (28), dans lequel sont alternativement intercalées des lamelles extérieures (30) fixées sur le carter (34) de façon solidaire en rotation, et des lamelles intérieures (26) fixées sur l'arbre (12) de façon solidaire en rotation.
